(19) Europäisches Patentamt / European Patent Office / Office européen des brevets

(11) **EP 4 287 156 A1**

(12) **EUROPÄISCHE PATENTANMELDUNG**

(43) Veröffentlichungstag:
06.12.2023   Patentblatt 2023/49

(21) Anmeldenummer: 22176476.4

(22) Anmeldetag: **31.05.2022**

(51) Internationale Patentklassifikation (IPC):
*G08G 1/01* (2006.01)   *G08G 1/015* (2006.01)
*G08G 1/052* (2006.01)   *G01C 21/34* (2006.01)
*H04W 4/44* (2018.01)   *H04W 4/46* (2018.01)

(52) Gemeinsame Patentklassifikation (CPC):
**G08G 1/0129; G08G 1/0112; G08G 1/0116;
G08G 1/012; G08G 1/0141; G08G 1/015;
G08G 1/052; H04W 4/029; H04W 4/40;**
G01C 21/3492

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Deutsche Telekom AG**
**53113 Bonn (DE)**

(72) Erfinder: **SUDHOLT, Frank**
**53604 Bad Honnef (DE)**

(74) Vertreter: **Schwöbel, Thilo K. et al**
**Kutzenberger Wolff & Partner**
**Waidmarkt 11**
**50676 Köln (DE)**

Bemerkungen:
Geänderte Patentansprüche gemäss Regel 137(2) EPÜ.

(54) **VERFAHREN ZUR ERMITTLUNG DER FAHRDAUER VON VERKEHRSTEILNEHMERN AUF EINEM STRECKENABSCHNITT DURCH ERFASSUNG EINER POSITIONSINFORMATION DER MOMENTANEN POSITION DER VERKEHRSTEILNEHMER UND EINER GESCHWINDIGKEITSINFORMATION DER VERKEHRSTEILNEHMER, TELEKOMMUNIKATIONSNETZ ODER SYSTEM, VERKEHRSTEILNEHMER, COMPUTERPROGRAMM UND COMPUTERLESBARES MEDIUM**

(57)   Es wird ein Verfahren zur Ermittlung der Fahrdauer von Verkehrsteilnehmern auf einem Streckenabschnitt durch Erfassung einer Positionsinformation der momentanen Position der Verkehrsteilnehmer und einer Geschwindigkeitsinformation der Verkehrsteilnehmer, wobei zur Ermittlung der Fahrdauer der Verkehrsteilnehmer auf dem Streckenabschnitt die nachfolgenden Schritte ausgeführt werden:
-- in einem ersten Schritt wird der Streckenabschnitt in eine Mehrzahl von Unterabschnitten eingeteilt, wobei jedem Unterabschnitt ein Längenwert zugeordnet wird,
-- in einem nachfolgenden zweiten Schritt wird jedem der Unterabschnitte ein Geschwindigkeitswert zugeordnet,
-- in einem nachfolgenden dritten Schritt wird die Fahrdauer der Verkehrsteilnehmer auf dem Streckenabschnitt in Abhängigkeit der jeweiligen Geschwindigkeitswerte sowie der jeweiligen Längenwerte bestimmt.

Fig. 1

**Beschreibung**

Stand der Technik

Die Erfindung betrifft ein Verfahren zur Ermittlung der Fahrdauer von Verkehrsteilnehmern auf einem Streckenabschnitt durch Erfassung einer Positionsinformation der momentanen Position der Verkehrsteilnehmer und einer Geschwindigkeitsinformation der Verkehrsteilnehmer.

Die Erfindung betrifft des Weiteren ein Telekommunikationsnetz oder ein System zur Ermittlung der Fahrdauer von Verkehrsteilnehmern auf einem Streckenabschnitt durch Erfassung einer Positionsinformation der momentanen Position der Verkehrsteilnehmer und einer Geschwindigkeitsinformation der Verkehrsteilnehmer.

Die Erfindung betrifft ferner einen Verkehrsteilnehmer zur Verwendung in einem erfindungsgemäßen Telekommunikationsnetz oder in einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Dies ist auch der Fall bei der zellularen V2X-Kmmunikation (C-V2X), welche die Möglichkeit zur Verfügung stellt, dass Kommunikationsteilnehmer bzw. Verkehrsteilnehmer Nachrichten authentisch bzw. autorisiert, anonym, sowie direkt (d.h. ohne Einbindung des Mobilfunknetzes, insbesondere über die PC5 Sidelink Funktionalität) in einer begrenzten Umgebung austauschen, insbesondere um Hauptanwendungsfälle wie Verkehrssicherheit, Verkehrsmanagement und Infotainment umsetzen zu können.

Bei vorbekannten Verfahren zur Fahrdauerbestimmung und der Erhebung der Basisinformationen, um diese ermitteln zu können, sind Probleme zu lösen, die sich beziehen beispielsweise auf die Aktualität und Genauigkeit der Daten oder Ergebnisse sowie die Kosten des Verfahrens bzgl. des Aufbaus einer Infrastruktur.

Offenbarung der Erfindung

Der Erfindung liegt die Aufgabe zugrunde, ein Verfahren bzw. eine Methode zur Ermittlung von mittleren Fahrdauern bzw. mittleren Geschwindigkeiten bereitzustellen zur Bestimmung der voraussichtlichen Fahrdauern, insbesondere basierend auf den derzeitigen Durchschnittsgeschwindigkeiten auf einzelnen Streckenabschnitten für ggf. verschiedene Strecken in einem Verkehrssystem, welches in einem Verkehrssystem (z.B. Intelligent Transport System (ITS)) mit V2X-Kommunikation kostengünstig, präzise (zum Zeitpunkt der Berechnung), aktuell und anonym ist, sowie mit Datenerhebung rein über V2X-Broadcast-Nachrichten auskommt.

Die Aufgabe wird erfindungsgemäß gelöst durch ein Verfahren zur Ermittlung der Fahrdauer von Verkehrsteilnehmern auf einem Streckenabschnitt durch Erfassung einer Positionsinformation der momentanen Position der Verkehrsteilnehmer und einer Geschwindigkeitsinformation der Verkehrsteilnehmer, wobei zur Ermittlung der Fahrdauer der Verkehrsteilnehmer auf dem Streckenabschnitt die nachfolgenden Schritte ausgeführt werden:

-- in einem ersten Schritt wird der Streckenabschnitt in eine Mehrzahl von Unterabschnitten eingeteilt, wobei jedem Unterabschnitt ein Längenwert zugeordnet wird,
-- in einem nachfolgenden zweiten Schritt wird jedem der Unterabschnitte ein Geschwindigkeitswert zugeordnet,
-- in einem nachfolgenden dritten Schritt wird die Fahrdauer der Verkehrsteilnehmer auf dem Streckenabschnitt in Abhängigkeit der jeweiligen Geschwindigkeitswerte sowie der jeweiligen Längenwerte bestimmt.

Es ist dadurch gemäß der vorliegenden Erfindung in vorteilhafter Weise möglich, dass die Bestimmung der Fahrdauer (bzw. die Bestimmung eines Schätzwertes bzw. eines Vorhersagewertes für die Fahrdauer) genauer bzw. mit einer höheren Präzision bzw. Vorhersagegenauigkeit möglich ist.

Erfindungsgemäß ist es somit vorgesehen, dass - zur Ermittlung der Fahrdauer von Verkehrsteilnehmern auf einem betrachteten Streckenabschnitt - zunächst der betrachtete Streckenabschnitt in eine Mehrzahl von Unterabschnitte eingeteilt wird, wobei jedem Unterabschnitt ein Längenwert zugeordnet wird; sodann wird jedem der Unterabschnitte ein Geschwindigkeitswert zugeordnet, wobei hierbei die sich auf dem jeweiligen Unterabschnitt befindenden Verkehrsteilnehmer bzw. deren jeweilige Geschwindigkeit herangezogen wird. Damit ist es erfindungsgemäß möglich, dass die Fahrdauer der Verkehrsteilnehmer auf dem Streckenabschnitt in Abhängigkeit der jeweiligen Geschwindigkeitswerte sowie der jeweiligen Längenwerte, welche für die jeweiligen Unterabschnitte des betrachteten Streckenabschnitts bestimmt wurden bzw. diesen zugeordnet sind, bestimmt wird bzw. bestimmbar ist bzw. ein Schätzwert bzw. ein Vorhersagewert für die Fahrdauer bestimmbar ist.

Gemäß einer bevorzugten Ausführungsform der vorliegenden Erfindung ist es vorgesehen, dass vor der Durchführung des dritten Schritts der erste und/oder der zweite Schritt wiederholt, insbesondere iterativ, durchgeführt wird.

Hierdurch ist es erfindungsgemäß vorteilhaft möglich, dass in vergleichsweise einfacher Art und Weise die Bestimmung der Fahrdauer (bzw. die Bestimmung eines Schätzwertes bzw. eines Vorhersagewertes für die Fahrdauer) genauer bzw. mit einer höheren Präzision bzw. Vorhersagegenauigkeit möglich ist.

Gemäß einer weiteren Ausführungsform der vorliegenden Erfindung ist es bevorzugt vorgesehen, dass der erste, zweite und dritte Schritt zur Ermittlung der Fahrdauer eines Verkehrsteilnehmers durch den Verkehrsteilnehmer selbst oder eine Berechnungseinrichtung desselben durchgeführt wird,
wobei insbesondere die Ermittlung der Fahrdauer die Berechnung einer Durchschnittsgeschwindigkeit erfordert oder entspricht, wobei die Berechnung der Durchschnittsgeschwindigkeit in Abhängigkeit einer ermittelten benutzten Fahrspur und/oder einer Fahrzeugtypinformation erfolgt.

Hierdurch ist es erfindungsgemäß in vorteilhafter Weise möglich, dass die Bestimmung der Fahrdauer bzw. eines Schätz- oder Vorhersagewertes dafür in einfacher und effizienter Weise flexibel durchgeführt werden kann, insbesondere durch den Verkehrsteilnehmer selbst oder eine Berechnungseinrichtung desselben; ferner ist es dadurch in vorteilhafter Weise möglich, dass die Ermittlung der Fahrdauer in Abhängigkeit einer ermittelten benutzten Fahrspur und/oder einer Fahrzeugtypinformation differenziert durchgeführt werden kann.

Gemäß einer weiteren Ausführungsform der vorliegenden Erfindung ist es bevorzugt vorgesehen, dass die auf dem Streckenabschnitt zu erfassende momentane Position und Geschwindigkeit der Verkehrsteilnehmer durch Übermitteln - innerhalb eines geographischen Gebiets - eines Nachrichteninhalts von einem stationären Sender zu einem stationären Empfänger über die Mehrzahl der mobilen Verkehrsteilnehmer erfolgt, wobei sowohl der Sender als auch die Mehrzahl von mobilen Verkehrsteilnehmern Broadcast-Nachrichten mit einem Nachrichteninhalt zu senden in der Lage sind und wobei der stationäre Empfänger in der Lage ist, Broadcast-Nachrichten zu empfangen, wobei der Nachrichteninhalt wenigstens einer Broadcast-Nachricht des Senders an wenigstens einen der Mehrzahl von mobilen Verkehrsteilnehmern mittels der wenigstens einen Broadcast-Nachricht mittels einer PC5-Sidelink Funktionalität, insbesondere unter Nutzung der Mode-4-Funktionalität, gesendet wird, wobei das Verfahren zeitlich vor dem ersten Schritt die nachfolgenden Schritte umfasst:

-- in einem vierten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,

-- eine Gebietsinformation zur Definition des geographischen Gebiets

-- eine Wiederholungsinformation und

-- eine Aggregationszeitinformation

umfasst,

-- in einem nachfolgenden fünften Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,

-- eine Geschwindigkeitsinformation des betrachteten Verkehrsteilnehmers

-- eine momentane Zeitstempelinformation und

-- eine Zusatzinformation

umfasst.

Hierdurch ist es erfindungsgemäß insbesondere vorteilhaft möglich, dass Daten für aktuelle Verkehrsflüsse von Straßenabschnitten mittels einer Mehrzahl von Broadcast-Nachrichten-Ketten zwischen dem Sender und dem Empfänger über mehrere Verkehrsteilnehmer zu übermittelt werden können, wodurch mit einfachen Mitteln eine Erfassung der aktuellen Verkehrssituation mittels einer Mehrzahl von Broadcast-Nachrichten-Ketten möglich ist, so dass die zur Ermittlung der Fahrdauer von Verkehrsteilnehmern auf dem betrachteten Streckenabschnitt erforderlichen Positionsinformationen der jeweiligen momentanen Positionen der Verkehrsteilnehmer sowie die Geschwindigkeitsinformationen dieser Verkehrsteilnehmer in einfacher und effizienter Weise sowie vergleichsweise schnell ermittelt werden können.

Gemäß einer weiteren Ausführungsform der vorliegenden Erfindung ist es bevorzugt vorgesehen, dass das geographische Gebiet den Streckenabschnitt umfasst,

wobei der Streckenabschnitt insbesondere einem Streckenabschnitt eines Verkehrsweges, insbesondere einer Straße, etwa einer Schnellstraße oder Autobahn, entspricht oder das geographische Gebiet den entsprechenden Bereich des Streckenabschnitts definiert,
wobei insbesondere die Gebietsinformation eine Richtungsinformation umfasst und/oder

wobei die Gebietsinformation eine Positionsinformation des stationären Empfängers umfasst.

Hierdurch ist es gemäß einer solchen Ausführungsform der Erfindung vorteilhaft möglich das erfindungsgemäße Verfahren einfach und effizient durchzuführen und eine entsprechende Fahrdauerinformation bereitzustellen.

Gemäß einer weiteren Ausführungsform der vorliegenden Erfindung ist es bevorzugt vorgesehen, dass die Positionsinformation der momentanen Position des betrachteten Verkehrsteilnehmers eine Positionsinformation auf dem Streckenabschnitt des Verkehrsweges ist und/oder

dass die Zusatzinformation wenigstens eine der nachfolgenden Informationen umfasst:

-- eine Fahrzeugtypinformation,
-- eine Fahrzeugkategorieinformation, insbesondere, ob es sich um einen Personenkraftwagen oder um einen Lastkraftwagen handelt, ferner bevorzugt, ob es sich um einen Sportwagen oder um eine Limousine oder um einen Kombinationskraftwagen oder um ein Sports Utility Vehicle oder um einen Lastkraftwagen mit Anhänger handelt,
-- eine Information zur maximalen Geschwindigkeit des Fahrzeugs,
-- eine das Fahrzeug identifizierende, insbesondere das Fahrzeug pseudonym identifizierende Information.

Hierdurch ist es gemäß einer solchen Ausführungsform der Erfindung vorteilhaft möglich, dass lediglich Verkehrsteilnehmer einbezogen werden, welche sich tatsächlich auf dem betrachteten Streckenabschnitt des Verkehrsweges befinden bzw. es ist vorteilhaft möglich, dass dadurch, dass die Zusatzinformation eine Fahrzeugtypinformation und/oder eine Fahrzeugkategorieinformation und/oder eine Information zur maximalen Geschwindigkeit des Fahrzeugs und/oder eine das Fahrzeug identifizierende, insbesondere pseudonym identifizierende Information umfasst, eine differenzierte und/oder präzisere Bestimmung der Fahrdauer bzw. eines Schätzwertes bzw. eines Vorhersagewertes für die Fahrdauer möglich ist.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

Hierdurch ist es gemäß einer solchen Ausführungsform der Erfindung vorteilhaft möglich das erfindungsgemäße Verfahren besonders einfach und effizient durchzuführen.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht frühestens nach Ablauf eines Zeitintervalls nach dem im vierten Schritt erfolgenden Empfang der wenigstens einen Broadcast-Nachricht sendet, wobei das Zeitintervall der Aggregationszeitinformation entspricht oder als Teil der Aggregationszeitinformation definiert ist,

wobei insbesondere die durch den betrachteten Verkehrsteilnehmer empfangene wenigstens eine Broadcast-Nachricht

-- eine vom stationären Sender gesendete Broadcast-Nachricht ist oder
-- eine von einem anderen Verkehrsteilnehmer gesendete weitere Broadcast-Nachricht ist,

wobei das Verfahren insbesondere aufweist:

-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,

wobei insbesondere die zusätzlichen Ergänzungsinformationen derart bereinigt werden, dass kein Verkehrsteilnehmer doppelt berücksichtigt ist.

Hierdurch ist es gemäß einer solchen Ausführungsform der Erfindung vorteilhaft möglich das erfindungsgemäße Verfahren besonders einfach und effizient durchzuführen.

Des Weiteren wird die Aufgabe gelöst durch ein Telekommunikationsnetz oder ein System zur Ermittlung der Fahrdauer von Verkehrsteilnehmern auf einem Streckenabschnitt durch Erfassung einer Positionsinformation der momentanen Position der Verkehrsteilnehmer und einer Geschwindigkeitsinformation der Verkehrsteilnehmer, wobei das Telekommunikationsnetz oder das System zur Ermittlung der Fahrdauer der Verkehrsteilnehmer auf dem Streckenabschnitt derart konfiguriert sind, dass:

-- der Streckenabschnitt in eine Mehrzahl von Unterabschnitten eingeteilt wird, wobei jedem Unterabschnitt ein Längenwert zugeordnet wird,
-- jedem der Unterabschnitte ein Geschwindigkeitswert zugeordnet wird, und
-- die Fahrdauer der Verkehrsteilnehmer auf dem Streckenabschnitt in Abhängigkeit der jeweiligen Geschwindigkeitswerte sowie der jeweiligen Längenwerte bestimmt wird.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch einen Verkehrsteilnehmer, welcher insbesondere als ein Kommunikationsteilnehmer agiert, d.h. insbesondere als Sender oder Empfänger, zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten in Form eines Senders und/oder Empfängers und/oder eines Verkehrsteilnehmers, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten in Form eines Senders und/oder Empfängers und/oder eines Verkehrsteilnehmer, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen

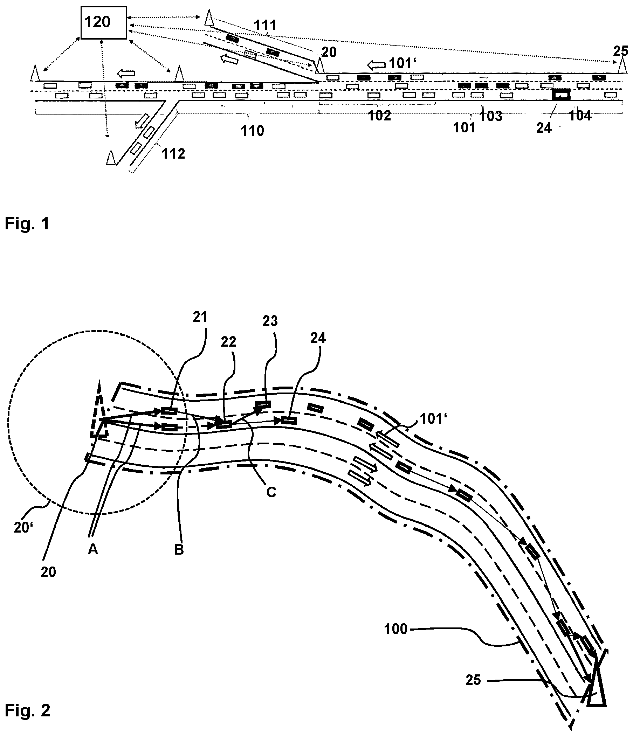

Figur 1     zeigt eine schematische Situation einer Mehrzahl von Verkehrsteilnehmern auf einem Streckenabschnitt, wobei zur Ermittlung der voraussichtlichen Fahrzeit bzw. Fahrdauer von Verkehrsteilnehmern eine Positionsinformation der momentanen Position der Verkehrsteilnehmer und eine Geschwindigkeitsinformation der Verkehrsteilnehmer erfasst werden.

Figur 2     zeigt eine schematische Situation einer Mehrzahl von Verkehrsteilnehmern (die als Kommunikationsteilnehmer fungieren) innerhalb eines geographischen Gebiets zur Übertragung eines Nachrichteninhalts von einem stationären Sender zu einem stationären Empfänger über eine Mehrzahl von mobilen Verkehrsteilnehmern zur Erfassung einer Positionsinformation der momentanen Position der Verkehrsteilnehmer und einer Geschwindigkeitsinformation der Verkehrsteilnehmer.

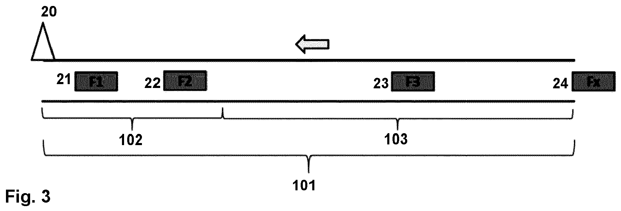

Figur 3     zeigt eine schematische und beispielhafte Situation zur Ermittlung der voraussichtlichen Fahrzeit bzw. Fahrdauer von Verkehrsteilnehmern.

Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 2 ist schematisch eine Situation einer Mehrzahl von (in aller Regel mobilen) Verkehrsteilnehmern 21, 22, 23, 24 (die als Kommunikationsteilnehmer fungieren) innerhalb eines geographischen Gebiets 100 zur Übertragung eines Nachrichteninhalts von einem stationären Sender 20 zu einem stationären Empfänger 25 über eine Mehrzahl von mobilen Verkehrsteilnehmern 21, 22, 23, 24 zur Erfassung einer Positionsinformation der momentanen Position der Verkehrsteilnehmer und einer Geschwindigkeitsinformation der Verkehrsteilnehmer 21, 22, 23, 24 zur Ermittlung der voraussichtlichen Fahrzeit bzw. Fahrdauer der Verkehrsteilnehmer 21, 22, 23, 24 dargestellt. In Figur 2 sind mehrere Verkehrsteilnehmer dargestellt, wobei jedoch lediglich ein erster Verkehrsteilnehmer 21, ein zweiter Verkehrsteilnehmer 22, ein dritter Verkehrsteilnehmer 23 und ein vierter Verkehrsteilnehmer 24 mittels Bezugszeichen benannt ist.

Hierbei ist sowohl der Sender 20 als auch die Mehrzahl von mobilen Verkehrsteilnehmern 21, 22, 23, 24 in der Lage, Broadcast-Nachrichten mit einem Nachrichteninhalt zu senden. Der stationäre Empfänger 25 ist jedenfalls (zumindest) in der Lage, Broadcast-Nachrichten zu empfangen. Der Nachrichteninhalt wenigstens einer Broadcast-Nachricht des Senders 20 wird erfindungsgemäß an wenigstens einen Verkehrsteilnehmer 21, 22, 23, 24 der Mehrzahl von mobilen Verkehrsteilnehmern 21, 22, 23, 24 mittels der wenigstens einen Broadcast-Nachricht mittels einer PC5-Sidelink Funktionalität, insbesondere unter Nutzung der Mode-4-Funktionalität, gesendet. Der unmittelbare Empfang einer betrachteten, vom Sender 20 ausgesandten Broadcast-Nachricht (und damit der Empfang ihres Nachrichteninhalts) durch einen Verkehrsteilnehmer 21, 22, 23, 24 (oder eine Mehrzahl solcher Verkehrsteilnehmer 21, 22, 23, 24) setzt voraus, dass sich der Verkehrsteilnehmer bzw. die Verkehrsteilnehmer 21, 22, 23, 24 innerhalb eines Sendegebiets 20' bzw. Funkabdeckungsbereichs 20' des Senders 20 befindet/befinden. Der Funkabdeckungsbereich 20' kann somit als derjenige räumliche Bereich (in Figur 2 beispielhaft um den Sender 20 herum) angesehen werden, innerhalb dessen von diesem Kommunikationsteilnehmer (d.h. vorliegend vom Sender 20) ausgesandte bzw. abgestrahlte Funksignale, insbesondere umfassend eine oder mehrere Broadcast-Nachrichten, noch eine Signalstärke bzw. Signaleigenschaften derart aufweisen, dass die anderen Verkehrsteilnehmer 21, 22, 23, 24 als Kommunikationsteilnehmer diese empfangen und verarbeiten, d.h. ggf. prozessieren und/oder entschlüsseln, können. Der ungefähre Radius des (im Wesentlichen kreisförmig gedachten) Funkabdeckungsbereichs 20' liegt typischerweise im Bereich zwischen ca. 50 m und mehreren hundert Metern, beispielsweise 200 m, 300 m, 400 m oder 500 m.

Erfindungsgemäß ist es vorgesehen, dass - nach dem Empfang einer betrachteten (vom Sender 20 ausgehenden) Broadcast-Nachricht durch beispielsweise den ersten Verkehrsteilnehmer 21 (d.h. in seiner Eigenschaft als Kommunikationsteilnehmer bzw. als Teilnehmer des erfindungsgemäßen Verfahrensablaufs) - dieser erste Verkehrsteilnehmer 21 wiederum als Sender fungiert und eine weitere Broadcast-Nachricht (insbesondere mittels einer PC5-Sidelink Funktionalität, insbesondere unter Nutzung der Mode-4-Funktionalität) sendet, wobei auch hierfür ein (mit dem des Senders 20 vergleichbarer) Senderadius und ein für den ersten Verkehrsteilnehmer 21 zu betrachtenden Funkabdeckungsbereich existiert bzw. anzunehmen ist, der jedoch der Einfachheit halber in Figur 2 nicht eigens gezeichnet und benannt ist; Gleiches gilt für die weiteren Verkehrsteilnehmer, insbesondere den zweiten, dritten und vierten Verkehrsteilnehmer 22, 23, 24.

Erfindungsgemäß ist es somit vorgesehen, dass zwischen dem Sender 20 und dem Empfänger 25, d.h. im Bereich des geographischen Gebiets 100, mehrere Verkehrsteilnehmer 21, 22, 23, 24, welche als Kommunikationsteilnehmer fungieren, derart jeweils zunächst eine Broadcast-Nachricht mit einem bestimmten Nachrichteninhalt (bzw. mehrere Broadcast-Nachrichten mit jeweils einem bestimmten Nachrichteninhalt) empfangen und sodann (zumindest in der Regel) eine weitere Broadcast-Nachricht mit einem weiteren Nachrichteninhalt senden, dass durch den Empfänger 25 zumindest eine Broadcast-Nachricht eines bestimmten Nachrichteninhalts empfangen wird. Dies ist in Figur 2 schematisch mittels zweier Pfeile A dargestellt, welche das Aussenden einer initialen Broadcast-Nachricht (d.h. quasi zum Zeitpunkt t = 0) vom Sender 20 bezeichnen sollen sowie deren Empfang durch zwei Verkehrsteilnehmer, darunter auch den ersten Verkehrsteilnehmer 21. Mittels eines Pfeils B ist in Figur 2 angedeutet, dass der erste Verkehrsteilnehmer 21 zu einem späteren Zeitpunkt (t = dt) eine erste weitere Broadcast-Nachricht aussendet, welche vom zweiten Verkehrsteilnehmer 22 (sowie ggf. weiteren Verkehrsteilnehmern, falls sich diese im entsprechenden Empfangsbereich befinden) empfangen wird. Mittels eines Pfeils C ist in Figur 2 angedeutet, dass der zweite Verkehrsteilnehmer 22 zu einem wiederum späteren Zeitpunkt (t = 2*dt) eine zweite weitere Broadcast-Nachricht aussendet, welche vom dritten Verkehrsteilnehmer 23 (sowie ggf. weiteren Verkehrsteilnehmern, falls sich diese im entsprechenden Empfangsbereich befinden) empfangen wird. Da erfindungsgemäß jede der weiteren Broadcast-Nachrichten zumindest Teile des initialen Nachrichteninhalts umfasst, gelangen zumindest diese Teile des initialen Nachrichteninhalts nach einer gewissen Anzahl weiterer solcher Nachrichtenempfangs- und nachfolgender Nachrichtensendeereignisse analog zu einer Nachrichtenkette schlussendlich zum Empfänger 25, wobei die Ausbreitungsrichtung von zumindest Teilen des initialen Nachrichteninhalts (bzw. die Fortpflanzungsrichtung der Nachrichten) erfindungsgemäß insbesondere derart vorgesehen ist, dass diese entgegen der Fahrtrichtung 101' der Verkehrsteilnehmer gewählt ist.

Figur 2 zeigt jedoch lediglich eine bevorzugte Möglichkeit bzw. Ausführungsform auf, wie es gemäß der vorliegenden Erfindung möglich ist, dass zur Ermittlung der Fahrdauer von Verkehrsteilnehmern 21, 22, 23, 24 auf einem Streckenabschnitt 101, welcher im Wesentlichen einem geographischen Gebiet 100 bzw. einem Teil eines geographischen Gebiets 100 (insbesondere einem Streckenabschnitt einer Fahrtrichtung) entspricht, jeweils eine Positionsinformation der momentanen Position der Verkehrsteilnehmer 21, 22, 23, 24 und eine Geschwindigkeitsinformation der Verkehrsteilnehmer 21, 22, 23, 24 erfasst werden, wobei zur Ermittlung der Fahrdauer der Verkehrsteilnehmer 21, 22, 23, 24 auf dem Streckenabschnitt 101 die nachfolgenden Schritte ausgeführt werden:

-- in einem ersten Schritt wird der Streckenabschnitt 101 in eine Mehrzahl von Unterabschnitten 102, 103, 104 eingeteilt, wobei jedem Unterabschnitt ein Längenwert zugeordnet wird,
-- in einem nachfolgenden zweiten Schritt wird jedem der Unterabschnitte 102, 103, 104 ein Geschwindigkeitswert zugeordnet,
-- in einem nachfolgenden dritten Schritt wird die Fahrdauer der Verkehrsteilnehmer 21, 22, 23, 24 auf dem Streckenabschnitt (101) in Abhängigkeit der jeweiligen Geschwindigkeitswerte sowie der jeweiligen Längenwerte bestimmt.

In Figur 1 ist die Aufteilung eines Streckenabschnitts 101 im Detail dargestellt: Figur 1 zeigt hierbei eine schematische Situation einer Mehrzahl von Verkehrsteilnehmern, wobei auf einem Streckenabschnitt 101 zur Ermittlung der voraussichtlichen Fahrzeit bzw. Fahrdauer der Verkehrsteilnehmer eine Positionsinformation der momentanen Position der Verkehrsteilnehmer und eine Geschwindigkeitsinformation der Verkehrsteilnehmer erfasst werden. Von den in Figur 2 schematisch einzeln bezeichneten Verkehrsteilnehmern 21, 22, 23, 24 ist lediglich ein Verkehrsteilnehmer 24 in Figur 1 eigens bezeichnet. Für den Streckenabschnitt 101 ist in

Figur 2 weiterhin schematisch gezeigt, wie dieser in eine Mehrzahl von Unterabschnitten eingeteilt ist, wobei zwischen dem Sender 20 und dem Empfänger 25 des Streckenabschnitts 101 bzw. des geographischen Gebiets 100 in Figur 1 ein erster Unterabschnitt 102, ein zweiter Unterabschnitt 103 und ein dritter Unterabschnitt 104 dargestellt sind, wobei der erste, zweite und dritte Unterabschnitt 102, 103, 104 gemäß der beispielhaften Darstellung in Figur 1 als in einer Abfolge entgegen der Fahrtrichtung 101' der Verkehrsteilnehmer auf dem betrachteten Streckenabschnitt angeordnet dargestellt sind.

Erfindungsgemäß wird - nach der Bildung bzw. der Einteilung der Unterabschnitte 102, 103, 104 des Streckenabschnitts 101 - im zweiten Schritt ein Geschwindigkeitswert jedem der Unterabschnitte 102, 103, 104 zugeordnet und im dritten Schritt die Fahrdauer der Verkehrsteilnehmer 21, 22, 23, 24 auf dem Streckenabschnitt 101 in Abhängigkeit der jeweiligen Geschwindigkeitswerte sowie der jeweiligen Längenwerte der Unterabschnitte 102, 103, 104 bestimmt.

Ferner sind in Figur 1 weitere Streckenabschnitte 110, 111, 112 dargestellt, welche in Fahrtrichtung (und aus der Perspektive des Verkehrsteilnehmers 24) hinter dem derzeitig befahrenen Streckenabschnitt 101 liegen bzw. angeordnet sind.

Erfindungsgemäß ist es insbesondere vorgesehen, dass vor der Durchführung des dritten Schritts der erste und/oder der zweite Schritt wiederholt, insbesondere iterativ, durchgeführt wird. Hierdurch ist es insbesondere vorteilhaft möglich, dass die Bestimmung der Fahrdauer (bzw. die Bestimmung eines Schätzwertes bzw. eines Vorhersagewertes für die Fahrdauer) genauer bzw. mit einer höheren Präzision bzw. Vorhersagegenauigkeit möglich ist.

Ferner ist es erfindungsgemäß ebenfalls bevorzugt, dass der erste, zweite und dritte Schritt zur Ermittlung der Fahrdauer eines Verkehrsteilnehmers 21, 22, 23, 24 durch den Verkehrsteilnehmer 21, 22, 23, 24 selbst oder eine Berechnungseinrichtung desselben durchgeführt wird, wobei insbesondere die Ermittlung der Fahrdauer die Berechnung einer Durchschnittsgeschwindigkeit erfordert oder entspricht, wobei die Berechnung der Durchschnittsgeschwindigkeit in Abhängigkeit einer ermittelten benutzten Fahrspur und/oder einer Fahrzeugtypinformation erfolgt. Hierdurch ist es insbesondere vorteilhaft möglich, dass auch die benutzte Fahrspur und/oder Fahrzeugtypinformationen zur Verbesserung der Berechnung der Fahrdauer bzw. zur Verbesserung der Berechnung eines Schätz- oder Vorhersagewertes für die Fahrdauer herangezogen wird.

Insbesondere ist es erfindungsgemäß vorteilhaft möglich, dass die Durchführung des Verfahrens zur Ermittlung der Fahrdauer der Verkehrsteilnehmern auf dem Streckenabschnitt darauf beruht, dass zur Erfassung der jeweiligen Positionsinformation der momentanen Position der Verkehrsteilnehmer und zur Erfassung der jeweiligen Geschwindigkeitsinformation der Verkehrsteilnehmer (hinsichtlich eines (letztlich beliebigen) betrachteten Verkehrsteilnehmers) durch Übermitteln - innerhalb eines geographischen Gebiets 100 - eines Nachrichteninhalts vom stationären Sender 20 zum stationären Empfänger 25 über eine Mehrzahl von mobilen Verkehrsteilnehmer 21, 22, 23, 24 erfolgt. Hierbei sind sowohl der Sender 20 als auch die Mehrzahl der Verkehrsteilnehmer 21, 22, 23, 24 in der Lage Broadcast-Nachrichten mit dem Nachrichteninhalt zu senden und der stationäre Empfänger 25 ist in der Lage, Broadcast-Nachrichten zu empfangen, wobei der Nachrichteninhalt wenigstens einer Broadcast-Nachricht des Senders 20 an wenigstens einen der Mehrzahl von mobilen Verkehrsteilnehmern 21, 22, 23, 24 mittels der wenigstens einen Broadcast-Nachricht mittels einer PC5-Sidelink Funktionalität, insbesondere unter Nutzung der Mode-4-Funktionalität, gesendet wird, wobei zeitlich vor dem ersten Schritt die nachfolgenden Schritte erfolgen:

-- in einem vierten Schritt empfängt der betrachtete Verkehrsteilnehmer wenigstens eine Broadcast-Nachricht, wobei der Nachrichteninhalt der wenigstens einen Broadcast-Nachricht wenigstens
-- eine Nachrichtenidentifikationsinformation,
-- eine Gebietsinformation zur Definition des geographischen Gebiets (100)
-- eine Wiederholungsinformation und
-- eine Aggregationszeitinformation
umfasst,
-- in einem nachfolgenden fünften Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

Es ist somit durch das erfindungsgemäße Verfahren und gemäß einer solchen Ausführungsvariante möglich, Daten für aktuelle Verkehrsflüsse von Straßenabschnitten mittels einer Mehrzahl von Broadcast-Nachrichten-Ketten (zwischen dem Sender 20 und dem Empfänger 25 über mehrere Verkehrsteilnehmer 21, 22, 23, 24) insbesondere zur Erfassung von Positionsinformationen der momentanen Positionen der Verkehrsteilnehmer und von Geschwindigkeitsinformationen der Verkehrsteilnehmer zur Ermittlung der Fahrdauer der Verkehrsteilnehmer auf dem Streckenabschnitt 101 zu übermitteln, wobei es erfindungsgemäß insbesondere vorgesehen ist, die Ausbreitungsrichtung dieser Nachrichtenübermittlung (bzw. Broadcast-Ketten-Nachrichten) entgegen der erlaubten Verkehrsrichtung (bzw. entgegen der Verkehrsflussrichtung, Bezugszeichen 101' in Figur 1 bzw. 2) vorzusehen. Insbesondere ist es gemäß einer solchen Ausführungsvariante vorgesehen, dass der Sender 20 als ein autorisierter Sender (z.B. am Funkmast eines Netzbetreibers und am Ausgangspunkt des geographischen Gebiets, etwa eines Straßenabschnitts) periodisch eine initiale spezielle Broadcast-Nachricht aussendet, wobei der Nachrichteninhalt von dem Sender 20 an eine Mehrzahl von Empfängern (Verkehrsteilnehmer 21, 22, 23, 24) als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird. Die Nachricht wird insbesondere nur von Fahrzeugen (Verkehrsteilnehmer bzw. Empfangsgeräte) auf dem Straßenabschnitt des geographischen Gebiets 100 (definiert in der initialen Broadcast Nachricht) sowie mit der vorgegebenen Fahrtrichtung 101' durch eigene Informationen (insbesondere Position, Geschwindigkeit, Zeitstempel und FZG Typ) angereichert und erneut als (auch von zukünftigen Empfängern anzureichernde) Broadcast Nachricht versendet, wodurch es mehrere Ketten von Broadcast Nachrichten geben kann (und in der Regel auch geben wird), die beim Erreichen des Endpunktes des Straßenabschnittes vom Empfänger 25 (bzw. vom finalen Empfänger), z.B. eine spezielle Empfangseinheit am Funkmast eines Netzbetreibers, empfangen werden und danach zu aktuellen Verkehrsflussinformationen des Straßenabschnitts verarbeitet werden.
Jeweils eine solche Kette von Broadcast-Nachrichten (welche über bzw. durch das geographische Gebiet 100 bis zum Empfänger 25 ,laufen') wird somit durch eine initiale spezielle Broadcast-Nachricht ausgelöst bzw. begonnen, wobei solche initialen speziellen Broadcast-Nachricht vom Sender 20 erfindungsgemäß insbesondere periodisch (beispielsweise alle 100, 200, 300, 400, 500, 600, 700 oder 800 Sekunden oder auch alle 2, 3, 4, 5, 8, 10, 12, 15, 18, 20, 25 oder 30 Minuten) wiederholt werden (insbesondere unter Nutzung einer jeweils anderen, beispielsweise hochgezählten, Nachrichtenidentifikationsinformation).
Somit ist es erfindungsgemäß in vorteilhafter Weise möglich, dass mit einem solchen Verfahren die Ermittlung präziser FZG-Typ-spezifischer Fahrdauern aus Broadcast-Nachrichten-Ketten realisierbar ist. Dies ist im Gegensatz zu bisher bekannten Verkehrsinformationssystemen, welche typischerweise Verkehrsinformationen nutzen, die im Wesentlichen auf Zählungen von Fahrzeugen (FZGen) an Straßenquerschnitten oder auf der Erhebung von FZG-Daten (Position, Geschwindigkeit, Zeitpunkt) basieren. Solche bisher bekannten Methoden bzw. Verkehrsinformationssysteme haben die folgenden Probleme hinsichtlich der Zählung von Fahrzeugen (FZGen) an Straßenquerschnitten:

-- Datenerhebung nur an Zählstellen und nicht auf Strecken(abschnitten);

-- Aktualität vs. Qualität, d.h. entweder eine vergleichsweise geringe Aktualität (z.B. bei einer üblichen Zähldauer von beispielsweise einer Stunde) oder eine geringe verarbeitete Datenmenge und damit geringere Qualität der Ergebnisse (etwa bei einer geringeren Zähldauer als eine Stunde);

-- eine Verdichtung der Zählstellen ist sehr kostenaufwendig

sowie die folgenden Probleme hinsichtlich der Erhebung von FZG-Daten (Position, Geschwindigkeit, Zeitpunkt):

-- keine Anonymität bei Datenerhebung (Datenschutzproblematik), d.h. Tracking möglich;

-- Mobilfunk-Datenverbrauch

-- geringe Anzahl der teilnehmenden FZG (Teilnahme kann deaktiviert werden).

Demgegenüber ist es beim erfindungsgemäßen Verfahren zur Ermittlung der Verkehrsinformationen möglich, dass folgende Eigenschaften kombinierbar sind:

-- Aktualität der Daten

-- hohe Anzahl teilnehmender FZGe / Erfassungsstellen

-- ausreichend genaue Erfassung der Daten für Streckenabschnitte mit unterschiedlichen Verkehrsdaten (Geschwindigkeiten, Verkehrsdichte), z.B. Berücksichtigung von Baustellen oder Staus

-- preisgünstige Umsetzung

-- Anonymität der FZGe

-- kein oder lediglich minimaler Verbrauch von Mobilfunk-Datenvolumen.

Erfindungsgemäß ist es vorgesehen insbesondere aus den Geschwindigkeitsmessungen unterschiedlicher FZGe realistische Fahrdauern für die FZGe zu ermitteln. Insbesondere die zuerst zu durchfahrenden Unterabschnitte einer Route, die Abschnitts-Fahrdauern beinhalten, werden mit der Erfindung plausibler ermittelt. Dadurch verbessern sich aber auch die Gesamtfahrdauern einer streckenmäßig langen Route.

Insbesondere wird erfindungsgemäß auch das Problem adressiert, dass unterschiedliche FZG-Typen je nach Verkehrssituation stark unterschiedliche Abschnitts-Fahrdauern haben und dass bei mehrspurigen Straßen die Bevorzugung der weiter linken Spuren tendenziell zu höheren Geschwindigkeiten und damit zu geringeren Abschnitts-Fahrdauern führt.

Insbesondere ist es erfindungsgemäß vorgesehen, dass das Verfahren eine Verkehrssystem-Infrastruktur kombiniert mit der Festlegung von Strecken(-Abschnitten) in für das Verfahren optimierter Weise (und einer dynamischen Anpassung), einer V2X-Kommunikation (nach 3GPP bzw. ETSI Standards) und einer Datenerhebung, Datenaggregation und Datenverarbeitung insbesondere mit Nutzung von Broadcast-Wellen.

Mit der Ausbreitung von e-Mobilität sowie semi-autonomem und autonomem Fahren wird die standardisierte V2X-Kommunikation (als Erweiterung von LTE- und 5G-Mobilfunk) innerhalb der Verkehrssysteme starke Verbreitung finden. Daher ist damit zu rechnen, dass zukünftig ein Großteil der am Verkehr teilnehmenden Verkehrsteilnehmer V2X-Kommunikation beherrschen und zur Ermittlung von Verkehrsflussdaten beitragen können.

Das in Figur 1 mit dem Bezugszeichen 120 bezeichnete V-Info-System ist das zentrale (Server-)System, in welchem alle V-Info des Verkehrssystems zusammenlaufen, aufgearbeitet und dann den Verkehrsteilnehmern zur Verfügung gestellt werden. Auch die Anpassung bzw. Justierung der Parameter werden vom V-Info-System 120 gesteuert. Die stationären Sender an den Verkehrsknotenpunkten bzw. Start- und Endpunkten der Streckenabschnitte, die sowohl die einzelnen Broadcast-Nachrichten-Ketten (Nachrichten-Wellen) initiieren als auch diese Nachrichten-Wellen empfangen, daraus die V-Info berechnen bzw. aufbereiten und dann an das V-Info-System senden.

Die Fahrzeuge (FZGe), die Teil des Verkehrssystems sind und damit die direkte (Sidelink) V2X-Kommunikation beherrschen, bereiten die empfangenden Broadcast-Nachrichten der Nachrichten-Wellen auf und senden diese weiter, sodass insbesondere nachfolgende FZGe und/oder ein stationärer Sender am Ende eines Straßenabschnitts aggregierte Informationen der FZGe vor ihm erhalten. Die Broadcast-Nachrichten-Wellen verlaufen entgegen der Fahrtrichtung der FZGe.

Grundsätzlich kann die Erfindungsmeldung / das Verfahren in drei Prozesse eingeteilt werden:

-- Die periodische Datenerhebung mittels Nachrichten-Wellen und Aufbereitung dieser Daten zu V-Info inklusive dynamischer Anpassung der Parameter für das Verkehrssystem in den stationären Empfängern an den Endpunkten von Straßenabschnitten.

-- Die individuelle Bestimmung und Berechnung der für ein FZG relevanten V-Info, insbesondere FD (Fahrdauer) und vm (Durchschnittsgeschwindigkeit), für eine bzw. alternative Routen zu einem Zielpunkt in jedem FZG auf einem Straßenabschnitt.

-- Den detaillierten Prozessverlauf für einen Streckenabschnitt, d.h. eine Nachrichten-Welle, wobei der stationäre Sender am Anfang des Streckenabschnitts die Broadcast-Nachrichten-Kette entgegen der Fahrrichtung initiiert, die FZGe auf dem entsprechenden Streckenabschnitt die empfangenen Broadcast-Nachrichten empfangen, aufbereiten und die aufbereiteten Nachrichten dann weiter senden und schließlich der stationäre Sender am Ende des Streckenabschnitts die Nachrichten-Welle empfängt und aufbereitet und danach entweder an ein V-Info System sendet und/oder dieser finale Empfänger als initialer Sender des nächsten Straßenabschnitts fungiert und somit eine initiale Broadcast-Nachricht für diesen nächsten Abschnitt initiiert, die diese V-Info Information des Vorabschnitts (der Vorabschnitte) enthält und zugleich die Broadcast-Wellen Weg entlang des nächsten Abschnitts definiert.

Das V-Info-System managt

-- die V-Info, d.h. aggregiert die V-Info der einzelnen Nachrichten-Wellen und bereitet diese auf,
-- die Parameter für die Nachrichtenwellen und
-- das Streckennetz, d.h. die Streckenabschnitte und die Teilabschnitte.

Die aktuellen Werte sendet das V-Info-System periodisch an die stationären Sender.
Die stationären Sender aktualisieren laufend die Parameter für den Streckenabschnitt, für den sie die Nachrichten-Wellen initiieren und senden in der Frequenz f die initialen Broadcast-Nachrichten der aktuellen Kette bzw. Welle.
Die FZGe im jeweiligen Streckenabschnitt leiten die Broadcast-Nachrichten angereichert weiter.
Der stationäre Sender am Ende des Streckenabschnitts empfängt die Nachrichten-Kette und bereitet daraus die aktuellen V-Info für den Streckenabschnitt auf.
Diese V-Info sendet der Sender dann an das V-Info-System (und/oder die Zusatzoption: der Sender fungiert als initialer Sender und sendet diese V-Info als Zusatzinformation in seiner initialen Broadcast-Nachricht für den nächsten Abschnitt; diese Option ist in der obigen Grafik aber nicht enthalten!).
Das V-Info-System empfängt die V-Info der finalen Sender, aggregiert die V-Info und aktualisiert bei Bedarf die Parameter und das Streckennetz.
Wenn ein FZG auf den Streckenabschnitt auffahren will, erhält es mit der Frequenz f eine Nachrichten-Welle für diesen Streckenabschnitt. Sollte das FZG auf ein Streckennetz auffahren, kann es die aktuell gültige (zuletzt durchgeführte) vollständige Nachrichten-Welle für jeden der zu befahrenden Streckenabschnitte beim V-Info-System abfragen oder einen stationären Sender (in der Nähe) der Auffahrstelle wird die V-Info an alle "auffahrenden" FZGe, z.B. per Broadcast-Nachricht, mit ausreichend hoher Frequenz anbieten.
In Figur 3 ist schematisch und beispielhaft eine konkrete Situation zur Ermittlung der voraussichtlichen Fahrzeit bzw. Fahrdauer von Verkehrsteilnehmern 21, 22, 23, 24 dargestellt. Beispielhaft wird eine Strecke L bzw. ein Streckenabschnitt 101 bestehend aus den Unterabschnitten L1 (bzw. einem ersten Unterabschnitt 102) und L2 (bzw. einem zweiten Unterabschnitt 103) (bzw. umfassend einen ersten bzw. zweiten Unterabschnitt 102, 103) betrachtet, die zwar unterschiedliche vmi haben (d.h. unterschiedliche mittlere Geschwindigkeiten auf einem Teilabschnitt bzw. einem Unterabschnitt), aber die vi Werte (d.h. die Werte der einzelnen gemessenen Geschwindigkeiten der Verkehrsteilnehmer 21, 22, 23, 24) einerseits mit der bekannten Methode nur dem gesamten L (bzw. Streckenabschnitt) zugeordnet werden und andererseits erfindungsgemäß aufgrund der Positionsinformation zu einer der beiden Unterabschnitte 102 bzw. 103 (bzw. zu L1 oder L2) zugeordnet werden. Als Beispiel wird die Fahrdauer FD auf dem Abschnitt L (bzw. dem Streckenabschnitt 101) mit beiden Methoden berechnet:
Beispielhaft werden vorliegend unterschiedliche Längen Li der Unterabschnitte 102, 103 sowie unterschiedliche mittlere Geschwindigkeiten vmi auf den Unterabschnitten 102, 103 angenommen (im Beispiel ein Kilometer (1000m) beim ersten Unterabschnitt 102 und zwei Kilometer (2000m) beim zweiten Unterabschnitt 103); die Fahrdauer FD auf L (d.h. auf dem gesamten betrachteten Streckenabschnitt 101) würde nach der gemäß dem Stand der Technik bekannten Methode falsch berechnet werden, wenn die Summe der Längen Li mit dem Gesamt-Geschwindigkeits-Mittelwert vm_L, berechnet aus allen vi (d.h. den Einzelgeschwindigkeitswerten der Verkehrsteilnehmer 21, 22, 23, 24) auf den Li bzw. Unterabschnitten 102, 103, multipliziert würde:
L1 (102) mit Länge 1km hat zwei vi Werte 50 km/h und 60 km/h (der Verkehrsteilnehmer 21 und 22). Es gilt somit vm1= 55 km/h, da ein vmi als arithmetisches Mittel berechnet wird; L2 (bzw. 103) mit Länge 2km hat einen vi Wert 90 km/h (des Verkehrsteilnehmer 23). Es gilt somit vm2= 90 km/h; mit L = L1 + L2 = 3 km (für den Streckenabschnitt 101) gilt vm_L = (50 + 60 + 90)/3 = 66,67 km/h mittels der konventionell bekannten Methode. Erfindungsgemäß wird mit getrennter Vorabberechnung der (Unterabschnitts-Fahrtdauern) FD1 und FD2 die Fahrdauer mit

$$FD = FD1 + FD2 = (L1/vm1) + (L2/vm2) = 1km/55km/h + 2km/90km/h = 0,0404 \text{ Stunden}$$

sowie die mittlere Geschwindigkeit mit

$$vm = (L1+L2)/FD = 3km/0{,}0404 \text{ Stunden} = 74{,}26 \text{ km/h}$$

berechnet.

Es ergibt sich somit eine Diskrepanz zwischen beiden Verfahren bei den Werten der Durchschnittsgeschwindigkeiten und somit auch bei den Werten der Fahrdauern, wobei beim dargestellten Beispiel die erfindungsgemäß berechnete Fahrdauer geringer ist.

## Patentansprüche

1. Verfahren zur Ermittlung der Fahrdauer von Verkehrsteilnehmern (21, 22, 23, 24) auf einem Streckenabschnitt (101) durch Erfassung einer Positionsinformation der momentanen Position der Verkehrsteilnehmer (21, 22, 23, 24) und einer Geschwindigkeitsinformation der Verkehrsteilnehmer (21, 22, 23, 24), wobei zur Ermittlung der Fahrdauer der Verkehrsteilnehmer (21, 22, 23, 24) auf dem Streckenabschnitt (101) die nachfolgenden Schritte ausgeführt werden:

   -- in einem ersten Schritt wird der Streckenabschnitt in eine Mehrzahl von Unterabschnitten (102, 103, 104) eingeteilt, wobei jedem Unterabschnitt ein Längenwert zugeordnet wird,
   -- in einem nachfolgenden zweiten Schritt wird jedem der Unterabschnitte (102, 103, 104) ein Geschwindigkeitswert zugeordnet,
   -- in einem nachfolgenden dritten Schritt wird die Fahrdauer der Verkehrsteilnehmer (21, 22, 23, 24) auf dem Streckenabschnitt (101) in Abhängigkeit der jeweiligen Geschwindigkeitswerte sowie der jeweiligen Längenwerte bestimmt.

2. Verfahren nach Anspruch 1, **dadurch gekennzeichnet, dass** vor der Durchführung des dritten Schritts der erste und/oder der zweite Schritt wiederholt, insbesondere iterativ, durchgeführt wird.

3. Verfahren nach einem der vorhergehenden Ansprüche, **dadurch gekennzeichnet, dass** der erste, zweite und dritte Schritt zur Ermittlung der Fahrdauer eines Verkehrsteilnehmers (21, 22, 23, 24) durch den Verkehrsteilnehmer (21, 22, 23, 24) selbst oder eine Berechnungseinrichtung desselben durchgeführt wird, wobei insbesondere die Ermittlung der Fahrdauer die Berechnung einer Durchschnittsgeschwindigkeit erfordert oder entspricht, wobei die Berechnung der Durchschnittsgeschwindigkeit in Abhängigkeit einer ermittelten benutzten Fahrspur und/oder einer Fahrzeugtypinformation erfolgt.

4. Verfahren nach einem der vorhergehenden Ansprüche, **dadurch gekennzeichnet, dass** die auf dem Streckenabschnitt (101) zu erfassende momentane Position und Geschwindigkeit der Verkehrsteilnehmer (21, 22, 23, 24) durch Übermitteln - innerhalb eines geographischen Gebiets (100) - eines Nachrichteninhalts von einem stationären Sender (20) zu einem stationären Empfänger (25) über die Mehrzahl der mobilen Verkehrsteilnehmer (21, 22, 23, 24) erfolgt, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind und wobei der stationäre Empfänger (25) in der Lage ist, Broadcast-Nachrichten zu empfangen, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,
   wobei das Verfahren zeitlich vor dem ersten Schritt die nachfolgenden Schritte umfasst:

   -- in einem vierten Schritt empfängt der betrachtete Verkehrsteilnehmer wenigstens eine Broadcast-Nachricht, wobei der Nachrichteninhalt der wenigstens einen Broadcast-Nachricht wenigstens
   -- eine Nachrichtenidentifikationsinformation,
   -- eine Gebietsinformation zur Definition des geographischen Gebiets (100)
   -- eine Wiederholungsinformation und
   -- eine Aggregationszeitinformation

   umfasst,

   -- in einem nachfolgenden fünften Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:
-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

5. Verfahren nach einem der vorhergehenden Ansprüche, **dadurch gekennzeichnet, dass** das geographische Gebiet (100) den Streckenabschnitt (101) umfasst, wobei der Streckenabschnitt (101) insbesondere einem Streckenabschnitt eines Verkehrsweges, insbesondere einer Straße, etwa einer Schnellstraße oder Autobahn, entspricht oder das geographische Gebiet (100) den entsprechenden Bereich des Streckenabschnitts (101) definiert, wobei insbesondere die Gebietsinformation eine Richtungsinformation umfasst und/oder wobei die Gebietsinformation eine Positionsinformation des stationären Empfängers (25) umfasst.

6. Verfahren nach einem der vorhergehenden Ansprüche, **dadurch gekennzeichnet, dass** die Positionsinformation der momentanen Position des betrachteten Verkehrsteilnehmers eine Positionsinformation auf dem Streckenabschnitt (101) des Verkehrsweges ist und/oder dass die Zusatzinformation wenigstens eine der nachfolgenden Informationen umfasst:

-- eine Fahrzeugtypinformation,
-- eine Fahrzeugkategorieinformation, insbesondere, ob es sich um einen Personenkraftwagen oder um einen Lastkraftwagen handelt, ferner bevorzugt, ob es sich um einen Sportwagen oder um eine Limousine oder um einen Kombinationskraftwagen oder um ein Sports Utility Vehicle oder um einen Lastkraftwagen mit Anhänger handelt,
-- eine Information zur maximalen Geschwindigkeit des Fahrzeugs,
-- eine das Fahrzeug identifizierende, insbesondere das Fahrzeug pseudonym identifizierende Information.

7. Verfahren nach einem der vorhergehenden Ansprüche, **dadurch gekennzeichnet, dass** der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets (100) erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

8. Verfahren nach einem der vorhergehenden Ansprüche, **dadurch gekennzeichnet, dass** der betrachtete Verkehrsteilnehmer die wenigstens eine weitere Broadcast-Nachricht frühestens nach Ablauf eines Zeitintervalls nach dem im vierten Schritt erfolgenden Empfang der wenigstens einen Broadcast-Nachricht sendet, wobei das Zeitintervall der Aggregationszeitinformation entspricht oder als Teil der Aggregationszeitinformation definiert ist, wobei insbesondere die durch den betrachteten Verkehrsteilnehmer empfangene wenigstens eine Broadcast-Nachricht

-- eine vom stationären Sender (20) gesendete Broadcast-Nachricht ist oder
-- eine von einem anderen Verkehrsteilnehmer gesendete weitere Broadcast-Nachricht ist,

wobei das Verfahren insbesondere aufweist:

-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,

wobei insbesondere die zusätzlichen Ergänzungsinformationen derart bereinigt werden, dass kein Verkehrsteilnehmer doppelt berücksichtigt ist.

9. Telekommunikationsnetz (100) oder System zur Ermittlung der Fahrdauer von Verkehrsteilnehmern (21, 22, 23, 24) auf einem Streckenabschnitt (101) durch Erfassung einer Positionsinformation der momentanen Position der Verkehrsteilnehmer (21, 22, 23, 24) und einer Geschwindigkeitsinformation der Verkehrsteilnehmer (21, 22, 23, 24), wobei das Telekommunikationsnetz (100) oder das System zur Ermittlung der Fahrdauer der Verkehrsteilnehmer (21, 22, 23, 24) auf dem Streckenabschnitt (101) derart konfiguriert sind, dass:

-- der Streckenabschnitt in eine Mehrzahl von Unterabschnitten (102, 103, 104) eingeteilt wird, wobei jedem Unterabschnitt ein Längenwert zugeordnet wird,
-- jedem der Unterabschnitte (102, 103, 104) ein Geschwindigkeitswert zugeordnet wird, und
-- die Fahrdauer der Verkehrsteilnehmer (21, 22, 23, 24) auf dem Streckenabschnitt (101) in Abhängigkeit der jeweiligen Geschwindigkeitswerte sowie der jeweiligen Längenwerte bestimmt wird.

10. Verkehrsteilnehmer zur Verwendung in einem Telekommunikationsnetz (100) oder in einem System nach Anspruch 9.

11. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24) auszuführenden Teil des Computerprogramms nach Anspruch 11 speichert oder überträgt.

**Geänderte Patentansprüche gemäss Regel 137(2) EPÜ.**

1. Verfahren zur Ermittlung der Fahrdauer von Verkehrsteilnehmern (21, 22, 23, 24) auf einem Streckenabschnitt (101) durch Erfassung einer Positionsinformation der momentanen Position der Verkehrsteilnehmer (21, 22, 23, 24) und einer Geschwindigkeitsinformation der Einzelgeschwindigkeit der Verkehrsteilnehmer (21, 22, 23, 24), wobei die Positionsinformationen und Geschwindigkeitsinformationen der Verkehrsteilnehmer (21, 22, 23, 24) mittels V2X-Broadcast-Nachrichten übermittelt werden, wobei zur Ermittlung der Fahrdauer der Verkehrsteilnehmer (21, 22, 23, 24) auf dem Streckenabschnitt (101) die nachfolgenden Schritte ausgeführt werden:

-- in einem ersten Schritt wird der Streckenabschnitt in eine Mehrzahl von Unterabschnitten (102, 103, 104) eingeteilt, wobei jedem Unterabschnitt ein Längenwert zugeordnet wird,
-- in einem nachfolgenden zweiten Schritt wird jedem der Unterabschnitte (102, 103, 104) ein Geschwindigkeitswert zugeordnet, wobei jede Einzelgeschwindigkeit aufgrund der Positionsinformation einem Unterabschnitt (102, 103, 104) zugeordnet wird und der dem jeweiligen Unterabschnitt (102, 103, 104) zugeordnete Geschwindigkeitswert als Mittelwert der dem jeweiligen Unterabschnitt zugeordneten Einzelgeschwindigkeiten bestimmt wird,
-- in einem nachfolgenden dritten Schritt wird die Fahrdauer der Verkehrsteilnehmer (21, 22, 23, 24) auf dem Streckenabschnitt (101) in Abhängigkeit der den Unterabschnitten (102, 103, 104) zugeordneten Geschwindigkeitswerte und Längenwerte bestimmt.

2. Verfahren nach Anspruch 1, **dadurch gekennzeichnet, dass** vor der Durchführung des dritten Schritts der erste und/oder der zweite Schritt wiederholt, insbesondere iterativ, durchgeführt wird.

3. Verfahren nach einem der vorhergehenden Ansprüche, **dadurch gekennzeichnet, dass** der erste, zweite und dritte Schritt zur Ermittlung der Fahrdauer eines Verkehrsteilnehmers (21, 22, 23, 24) durch den Verkehrsteilnehmer (21, 22, 23, 24) selbst oder eine Berechnungseinrichtung desselben durchgeführt wird, wobei insbesondere die Ermittlung der Fahrdauer die Berechnung einer über den Streckenabschnitt (101) gemittelten Durchschnittsgeschwindigkeit erfordert oder entspricht, wobei die Berechnung der Durchschnittsgeschwindigkeit differenziert nach einer ermittelten benutzten Fahrspur und/oder einem Fahrzeugtyp erfolgt.

4. Verfahren nach einem der vorhergehenden Ansprüche, **dadurch gekennzeichnet, dass** die auf dem Streckenabschnitt (101) zu erfassende momentane Position und Geschwindigkeit der Verkehrsteilnehmer (21, 22, 23, 24) durch Übermitteln - innerhalb eines geographischen Gebiets (100) - eines Nachrichteninhalts von einem stationären Sender (20) zu einem stationären Empfänger (25) über die Mehrzahl der mobilen Verkehrsteilnehmer (21, 22, 23, 24) erfolgt, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind und wobei der stationäre Empfänger (25) in der Lage ist, Broadcast-Nachrichten zu empfangen, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,
wobei das Verfahren zeitlich vor dem ersten Schritt die nachfolgenden Schritte umfasst:

-- in einem vierten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,
-- eine Gebietsinformation zur Definition des geographischen Gebiets (100)
-- eine Wiederholungsinformation und
-- eine Aggregationszeitinformation

umfasst,
-- in einem nachfolgenden fünften Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

5. Verfahren nach einem der vorhergehenden Ansprüche, **dadurch gekennzeichnet, dass** das geographische Gebiet (100) den Streckenabschnitt (101) umfasst, wobei der Streckenabschnitt (101) insbesondere einem Streckenabschnitt eines Verkehrsweges, insbesondere einer Straße, etwa einer Schnellstraße oder Autobahn, entspricht oder das geographische Gebiet (100) den entsprechenden Bereich des Streckenabschnitts (101) definiert,
wobei insbesondere die Gebietsinformation eine Richtungsinformation umfasst und/oder wobei die Gebietsinformation eine Positionsinformation des stationären Empfängers (25) umfasst.

6. Verfahren nach einem der vorhergehenden Ansprüche, **dadurch gekennzeichnet, dass** die Positionsinformation der momentanen Position des betrachteten Verkehrsteilnehmers eine Positionsinformation auf dem Streckenabschnitt (101) des Verkehrsweges ist und/oder
dass die Zusatzinformation wenigstens eine der nachfolgenden Informationen umfasst:

-- eine Fahrzeugtypinformation,
-- eine Fahrzeugkategorieinformation, insbesondere, ob es sich um einen Personenkraftwagen oder um einen Lastkraftwagen handelt, ferner bevorzugt, ob es sich um einen Sportwagen oder um eine Limousine oder um einen Kombinationskraftwagen oder um ein Sports Utility Vehicle oder um einen Lastkraftwagen mit Anhänger handelt,
-- eine Information zur maximalen Geschwindigkeit des Fahrzeugs,
-- eine das Fahrzeug identifizierende, insbesondere das Fahrzeug pseudonym identifizierende Information.

7. Verfahren nach einem der vorhergehenden Ansprüche, **dadurch gekennzeichnet, dass** der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets (100) erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

8. Verfahren nach einem der vorhergehenden Ansprüche, **dadurch gekennzeichnet, dass** der betrachtete Verkehrsteilnehmer die wenigstens eine weitere Broadcast-Nachricht frühestens nach Ablauf eines Zeitintervalls nach dem im vierten Schritt erfolgenden Empfang der wenigstens einen Broadcast-Nachricht sendet, wobei das Zeitintervall der Aggregationszeitinformation entspricht oder als Teil der Aggregationszeitinformation definiert ist,

   wobei insbesondere die durch den betrachteten Verkehrsteilnehmer empfangene wenigstens eine Broadcast-Nachricht

   -- eine vom stationären Sender (20) gesendete Broadcast-Nachricht ist oder
   -- eine von einem anderen Verkehrsteilnehmer gesendete weitere Broadcast-Nachricht ist,

   wobei das Verfahren insbesondere aufweist:

   -- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
   -- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,

   wobei insbesondere die zusätzlichen Ergänzungsinformationen derart bereinigt werden, dass kein Verkehrsteilnehmer doppelt berücksichtigt ist.

9. System zur Ermittlung der Fahrdauer von Verkehrsteilnehmern (21, 22, 23, 24) auf einem Streckenabschnitt (101) durch Erfassung einer Positionsinformation der momentanen Position der Verkehrsteilnehmer (21, 22, 23, 24) und einer Geschwindigkeitsinformation der Einzelgeschwindigkeit der Verkehrsteilnehmer (21, 22, 23, 24), wobei das System die Verkehrsteilnehmer (21, 22, 23, 24) umfasst und die Verkehrsteilnehmer (21, 22, 23, 24) dazu konfiguriert sind, die Positionsinformationen und Geschwindigkeitsinformationen mittels V2X-Broadcast-Nachrichten zu übermitteln, wobei das System zur Ermittlung der Fahrdauer der Verkehrsteilnehmer (21, 22, 23, 24) auf dem Streckenabschnitt (101) derart konfiguriert sind, dass:

   -- der Streckenabschnitt in eine Mehrzahl von Unterabschnitten (102, 103, 104) eingeteilt wird, wobei jedem Unterabschnitt ein Längenwert zugeordnet wird,
   -- jedem der Unterabschnitte (102, 103, 104) ein Geschwindigkeitswert zugeordnet wird, wobei jede Einzelgeschwindigkeit aufgrund der Positionsinformation einem Unterabschnitt (102, 103, 104) zugeordnet wird und der dem jeweiligen Unterabschnitt (102, 103, 104) zugeordnete Geschwindigkeitswert als Mittelwert der dem jeweiligen Unterabschnitt zugeordneten Einzelgeschwindigkeiten bestimmt wird, und
   -- die Fahrdauer der Verkehrsteilnehmer (21, 22, 23, 24) auf dem Streckenabschnitt (101) in Abhängigkeit der den Unterabschnitten (102, 103, 104) zugeordneten Geschwindigkeitswerte und Längenwerte bestimmt wird.

10. Verkehrsteilnehmer zur Verwendung in einem System nach Anspruch 9.

11. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24) auszuführenden Teil des Computerprogramms nach Anspruch 11 speichert oder überträgt.

**Fig. 1**

**Fig. 2**

**Fig. 3**

Europäisches
Patentamt

European
Patent Office

Office européen
des brevets

**Nummer der Anmeldung**

**EP 22 17 6476**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/221232 A1 (SHANG WEI XIONG [CN] ET AL) 30. August 2012 (2012-08-30) * Absätze [0010] - [0016], [0018], [0019], [0022], [0024], [0027], [0028], [0029] - [0031], [0039] - [0042], [0051] - [0056], [0070], [0072], [0083] * * Abbildungen 1, 3, 4 * | 1-12 | INV. G08G1/01 G08G1/015 G08G1/052 G01C21/34 H04W4/44 H04W4/46 |
| X A | US 2016/025510 A1 (BELZNER HEIDRUN [DE] ET AL) 28. Januar 2016 (2016-01-28) * Absätze [0006], [0021] - [0024], [0033], [0054], [0055], [0068], [0070], [0080], [0082] * * Abbildungen 1, 3A * | 1-3,5,6, 9-12  4,7,8 | |
| X  A | US 2021/134147 A1 (CAMPLEJOHN CHRISTOPHER ANDREW [GB] ET AL) 6. Mai 2021 (2021-05-06) * Absätze [0018], [0020], [0023] - [0032], [0121] - [0131], [0166] - [0169] * | 1-3,5,6, 9-12  4,7,8 | |
| A | CN 110 072 210 B (UNIV NATIONAL DONG HWA) 9. November 2021 (2021-11-09) * das ganze Dokument * | 1-12 | RECHERCHIERTE SACHGEBIETE (IPC) G08G G01C H04W |

Der vorliegende Recherchenbericht wurde für alle Patentansprüche erstellt

| Recherchenort | Abschlußdatum der Recherche | Prüfer |
|---|---|---|
| Den Haag | 31. Oktober 2022 | Roxer, Adam |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 6476

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 2012221232 | A1 | | 30-08-2012 | CA | 2778499 | A1 | 05-05-2011 |
| | | | | CN | 102262819 | A | 30-11-2011 |
| | | | | EP | 2494536 | A1 | 05-09-2012 |
| | | | | JP | 5752141 | B2 | 22-07-2015 |
| | | | | JP | 2013509628 | A | 14-03-2013 |
| | | | | KR | 20120112375 | A | 11-10-2012 |
| | | | | US | 2012221232 | A1 | 30-08-2012 |
| | | | | WO | 2011051125 | A1 | 05-05-2011 |
| US 2016025510 | A1 | | 28-01-2016 | CN | 104205184 | A | 10-12-2014 |
| | | | | DE | 102012204306 | A1 | 19-09-2013 |
| | | | | US | 2016025510 | A1 | 28-01-2016 |
| | | | | WO | 2013139589 | A1 | 26-09-2013 |
| US 2021134147 | A1 | | 06-05-2021 | EP | 4052137 | A2 | 07-09-2022 |
| | | | | US | 2021134147 | A1 | 06-05-2021 |
| | | | | WO | 2021084323 | A2 | 06-05-2021 |
| CN 110072210 | B | | 09-11-2021 | KEINE | | | |

Für nähere Einzelheiten zu diesem Anhang : siehe Amtsblatt des Europäischen Patentamts, Nr.12/82

EPO FORM P0461